# EUROPEAN PATENT SPECIFICATION

(11) **EP 4 552 727 B1**
(45) Date of publication and mention of the grant of the patent: **28.01.2026**
(21) Application number: 24208906.8
(22) Date of filing: 25.10.2024
(51) Int. Cl.: B01D 53/04, B01D 53/06, B01D 53/08

(54) **APPARATUS AND PROCESS OF MODULAR TRUE MOVING BED FOR GAS SEPERATION USING HEAT EXCHANGE REACTOR**
VORRICHTUNG UND VERFAHREN FÜR MODULARES ECHTES WANDERBETT ZUR GASTRENNUNG MIT EINEM WÄRMEAUSTAUSCHREAKTOR
APPAREIL ET PROCÉDÉ DE LIT MOBILE VÉRITABLE MODULAIRE POUR SÉPARATION DE GAZ À L'AIDE D'UN RÉACTEUR D'ÉCHANGE DE CHALEUR

(30) Priority: 09.11.2023 IN 202321076711
(43) Date of publication of application: 14.05.2025
(73) Proprietor: Tata Consultancy Services Limited, Maharashtra (IN)
(72) Inventor: Badhan, Navneet Singh, 411057 Pune - Maharashtra (IN); Chaudhary, Ayush, 411057 Pune - Maharashtra (IN); Subramanian, Sivakumar, 411057 Pune - Maharashtra (IN); Suhail, Mohammed, 411057 Pune - Maharashtra (IN); Runkana, Venkataramana, 411057 Pune - Maharashtra (IN); Rao, Davuluri Prahlada, 500049 Miyapur, Hyderabad (IN)
(74) Representative: Goddar, Heinz J.

(56) References cited:
- JP-A- 2009 178 711
- US-A1- 2022 355 238
- US-A1- 2023 241 546

## Description

### TECHNICAL FIELD

The disclosure herein generally relates to true moving bed, and, more particularly, to apparatus and process of modular true moving bed for gas separation using heat exchange reactor.

### BACKGROUND

Traditional gas separation techniques separate one or more gases from a gaseous mixture. Gas separation is becoming increasingly important for many industrial activities, including treatment of emissions from coal-fired power plants to remove CO2 to reduce greenhouse effect. Other applications are also gaining importance, such as separation and purification of commercially important gases, for example H2, CH4 and N2 from natural gas and the like.

Gaseous mixtures can be separated using specific adsorbents such as zeolites, activated carbon, and the like, based on the affinities of the gas components to the adsorbent. Traditional moving bed adsorption reactor, in which adsorbent particles flow under the effect of gravity from top to bottom, lack in addressing particle attrition of adsorbent particles, and this attrition results in lower particle life and increased process cost. Rotary bed adsorption reactor, in which particles do not move relative to each other, addresses the problem of particle attrition, but this reactor configuration does not seal different zones of the process, causing gas bypass. Further, the gas flow path is not uniform due to the tangential flow of gas in a circular bed resulting in a very wide residence time distribution. JP 2009178711 discloses moving-bed type continuous concentration system and method for volatile organic compound is disclosed to increase removal efficiency of volatile organic compounds generated at an industrial site, to greatly reduce the scale of a system, and to enhance a concentration ratio. A continuous concentration system for volatile organic compounds for concentrating volatile organic compounds through an adsorption process and a desorption process includes a moving-bed chamber B containing modules 1-7 for adsorbing volatile organic compounds. One side of the moving-bed chamber is provided with an adsorbing bed line supplied with the volatile organic compound to adsorb it to the module, and the other side of the moving-bed chamber is provided with a desorption-cooling bed line for performing a desorption process of desorbing the volatile organic compound adsorbed to the module, and a cooling process of cooling the module subjected to the desorption process. US 2023/0241546 discloses A system for gas adsorbate capture has an adsorption reactor(s) configured for receiving an adsorbate gas flow. A regeneration reactor(s) is configured for receiving a regenerative fluid flow. A plurality of individual sorbent cells are in a generally continuous cycle between the adsorption reactor and the regeneration reactor. A group of the individual sorbent cells may form an adsorption moving bed in the adsorption reactor to capture the adsorbate from the gas flow. US2022/0355238 discloses a system for capturing atmospheric carbon dioxide including a track and a plurality of panels moveably coupled to the track, each panel having a sorbent material. The system also includes a harvest house having a sorbent regeneration system and at least one aperture, and a propulsion system coupled to the track and configured to move each panel in a circuit having a collection phase and a release phase. For each panel, the collection phase of the circuit includes the panel moving along the track to expose the sorbent material to an airflow and allow the sorbent material to capture carbon dioxide. For each panel, the release phase of the circuit includes the panel being sufficiently enclosed inside the harvest house that the sorbent regeneration system may operate on the sorbent material to release captured carbon dioxide from the sorbent material and form an enriched gas.

### SUMMARY

Embodiments of the present disclosure present technological improvements as solutions to one or more of the above-mentioned technical problems recognized by the inventors in conventional systems. For example, in one embodiment, a system for modular true moving bed for gas separation using heat exchange reactor apparatus and process is provided. The system includes a heat exchange reactor arrangement 100 having at least one of an adsorption zone 102, a desorption zone 104 and a cooling zone 106 for indirect heat exchange. Further, a gaseous mixture allows to flow through the tube inlet port of the adsorption zone 102, the sorbent material present inside each cartridge adsorbs a target gas to reach the desorption zone 104. Then, the target gas evacuates from the gaseous mixture adsorbed by the plurality of cartridges through the plurality of evacuation ports inside each tube. Further, a cooling fluid is passed through the cooling shell inlet port of the cooling zone 106 to flow over the tubes where the plurality of cartridges are in motion to perform heat exchange to cool the sorbent material.

In another aspect, a process for modular true moving bed for gas separation using heat exchange reactor apparatus and process is provided. The method includes gaseous mixture directed via a tube inlet port 204 of an adsorption zone 102 containing sorbent material. The sorbent material is carried within each cartridge among a plurality of cartridges moving inside each tube of the adsorption zone 102, wherein a modular true moving bed for gas separation using heat exchange reactor comprises an adsorption zone 102, a desorption zone 104, and a cooling zone 106. Further, a target gas adsorbed from the gaseous mixture is passed through the tube inlet port by the sorbent material present inside each cartridge among the plurality of cartridges moving inside each tube while passing through the adsorption zone 102.

The target gas evacuates from the plurality of cartridges (214a, 214b,...,214n) carrying the sorbent material moving within each tube passing through the desorption zone 104 and the sorbent material present inside the plurality of cartridges (214a, 214b,...,214n) is cooled using a cooling fluid, while passing through the cooling zone 106.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG.1 illustrates a system also referred to as a modular true moving bed apparatus heat exchange arrangement constructed in accordance with some embodiments of the present disclosure.
FIG.2A illustrates an isometric view and FIG.2B illustrates a transparent view of adsorption zone in the heat exchange arrangement using the system of FIG.1, in accordance with some embodiments of the present disclosure.
FIG.2C illustrates a cross-sectional side view depicting fluid and gaseous mixture flow over each cartridge carrying tube of the adsorption zone using the system of FIG.1, in accordance with some embodiments of the present disclosure.
FIG.2D illustrates a cross-sectional top view of various components in the adsorption zone using the system of FIG.1, in accordance with some embodiments of the present disclosure.
FIG.3A illustrates an isometric view of desorption zone in the heat exchange arrangement using the system of FIG.1, in accordance with some embodiments of the present disclosure.
FIG.3B illustrates a transparent view of desorption zone in the heat exchange arrangement using the system of FIG.1, in accordance with some embodiments of the present disclosure.
FIG.3C illustrates a cross-sectional top view of various components in the desorption zone having a plurality of evacuation ports on the outer shell using the system of FIG.1, in accordance with some embodiments of the present disclosure.
FIG.3D illustrates a cross-sectional side view of hot fluid flow over the plurality of cartridges carrying tubes in the desorption zone using the system of FIG.1, in accordance with some embodiments of the present disclosure.
FIG.3E illustrates the plurality of heating zones and evacuation ports at different locations along the shell length in the desorption zone using the system of FIG.1, in accordance with some embodiments of the present disclosure.
FIG.4A illustrates an isometric view of cooling zone in the heat exchange arrangement using the system of FIG.1, in accordance with some embodiments of the present disclosure.
FIG.4B illustrates a transparent view of cooling zone in the heat exchange arrangement using the system of FIG.1, in accordance with some embodiments of the present disclosure.
FIG.4C illustrates a cross-sectional top view of various components of a cooling zone in the heat exchange arrangement using the system of FIG.1, in accordance with some embodiments of the present disclosure.
FIG.4D illustrates a cross-sectional side view of fluid flow for both direct cooling and indirect cooling over each tube in the cooling zone using the system of FIG.1, in accordance with some embodiments of the present disclosure.
FIG.5A illustrates an isometric view of the sorbent carrying cartridge that moves inside the tubes of the heat exchange arrangement using the system of FIG.1, in accordance with some embodiments of the present disclosure.
FIG.5B, FIG.5C and FIG.5D illustrates track locomotion mechanism of cartridges that move inside the tubes of the heat exchange arrangement using the system of FIG.1, in accordance with some embodiments of the present disclosure.
FIG.6A illustrates a cross-sectional top view of modular true moving bed apparatus in the heat exchange arrangement employing temperature swing adsorption (TSA) with heat integration between desorption zone and cooling zone using the system of FIG.1, in accordance with some embodiments of the present disclosure.
FIG.6B illustrates a cross-sectional top view of modular true moving bed apparatus in the heat exchange arrangement employing temperature swing adsorption (TSA) with heat integration between adsorption zone and desorption zone using the system of FIG.1, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the appended claims.

Existing gas separation techniques employing temperature swing adsorption include at least one of an adsorption zone, a desorption zone, and a cooling zone. In the adsorption zone, gaseous mixture is separated using sorbent particles that adsorb gases based on their affinity. In a true moving bed for adsorption, the sorbent particles move under the effect of gravity in counter-current direction to the gas flow. This configuration leads to particle attrition, resulting in shortened particle life and higher process cost. In addition, direct contact between the sorbent particles and the steam in the desorption zone causes a decrease in the sorbent capacity due to sorbent particles getting deactivated. The condensation of steam requires additional step to remove it, further increasing the process cost. Therefore, the present disclosure addresses particle attrition of sorbent particles in the modular true moving bed using heat exchange configuration that facilitates indirect contact heat exchange between solid and fluid and supports direct heating when dry gases are used as heating or cooling medium.

In a shell and tube heat exchange configuration, one of the fluid flows through a shell, while the other fluid flows through a network of tubes. The fluids are isolated from each other, flowing inside their respective structures. The heat transfer between the two mediums takes place via conduction and convection, with no contact between the fluids.

Embodiments herein provide a modular true moving bed apparatus and process for gas separation using heat exchange reactor arrangement. The modular true moving bed apparatus may be alternatively referred to as apparatus or system. The apparatus 100 provides an efficient method for heating or cooling the solid or sorbent material that are carried in a plurality of cartridges. The apparatus provides solution for challenges in existing techniques, allowing indirect heat exchange for temperature swing adsorption. Major problem with existing temperature swing adsorption processes is particle attrition and direct contact between the adsorbent bed and the steam that is used to heat the bed during the desorption stage of the process. The apparatus employs a shell and tube heat exchange design which comprises an adsorption zone, a desorption zone, and a cooling zone. Structured adsorbents such as monoliths, or particulate adsorbents, are packed inside tubular structures referred as cartridges which moves sequentially via a locomotion mechanism through different zones in the process. Further, indirect heat exchange between the hot fluid and the moving sorbent bed occurs in the desorption zone, desorbing the target gas adsorbed in the adsorption zone. Further the moving sorbent bed moves towards the cooling zone to exchange heat with the cold fluid, directly or indirectly, to regenerate the sorbent material for the next cycle of gas separation process.

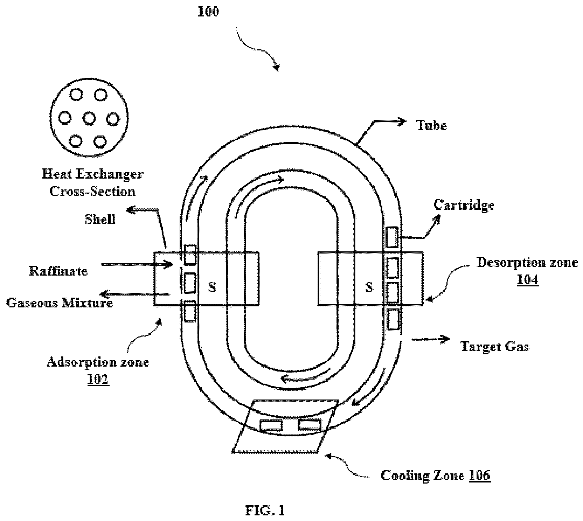

Referring now to the drawings, and more particularly to FIG.1 through FIG.6B, where similar reference characters denote corresponding features consistently throughout the figures, there are shown preferred embodiments, and these embodiments are described in the context of the following exemplary system and/or method.

FIG.1 illustrates a modular true moving bed apparatus heat exchange arrangement constructed in accordance with some embodiments of the present disclosure. The modular true moving bed apparatus heat exchange arrangement 100 comprises an adsorption zone 102, a desorption zone 104, and a cooling zone 106 in heat exchanger arrangement to minimize particle attrition and facilitate indirect heat exchange.

The present disclosure contemplates towards thermal heat exchange between the sorbent particles or structured sorbents, with no relative motion among themselves, carried in the plurality of cartridges which are in motion inside each tube of the heat exchanger. Each of the adsorption zone 102, the desorption zone 104, and the cooling zone 106 are connected sequentially by a locomotion track and the plurality of cartridges move through each zone on the track using suitable locomotion mechanism.

The sorbent material may include for example structured sorbents called monoliths, or particulate adsorbents that are packed inside tubular structures in which each cartridge moves sequentially through each zone of the gas separation process. Each cartridge is a packed moving bed with, but not limited to, circular cross-section to minimize mechanical and thermal stress and optimize the heat transfer characteristics of the process.

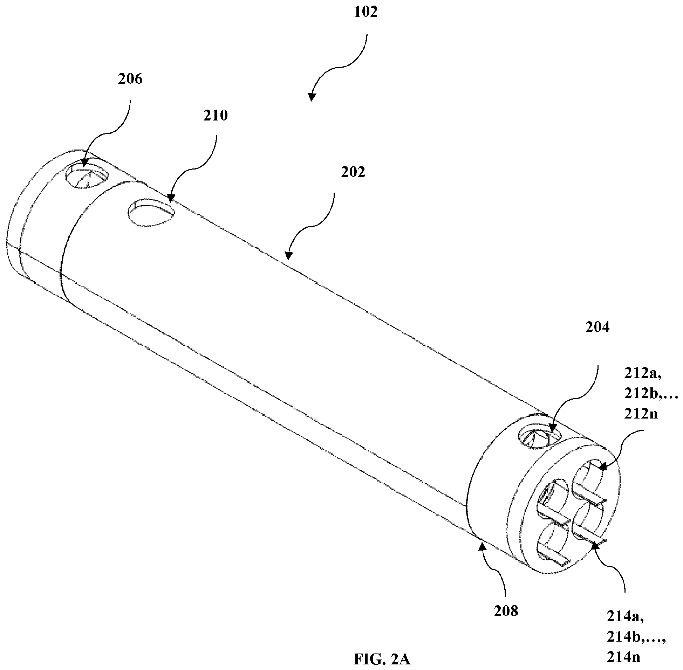

FIG.2A illustrates an isometric view of adsorption zone in the heat exchange arrangement using the system of FIG.1, in accordance with some embodiments of the present disclosure.

Adsorption zone 102 is covered with an outer shell 202, and a plurality of tubes (212a, 212b,...,212n) arranged horizontally inside the adsorption zone 102.

The outer shell 202 of the adsorption zone 102 comprises a tube inlet port 204, a tube outlet port 206, a shell inlet port 208, and a shell outlet port 210. The tube inlet port 204 allows a gaseous mixture to flow through each tubes containing plurality of cartridges (214a, 214b,...,214n) which move in counter-current direction to gas flow inside each tube. Each cartridge carries sorbent material which is in motion inside each tube.

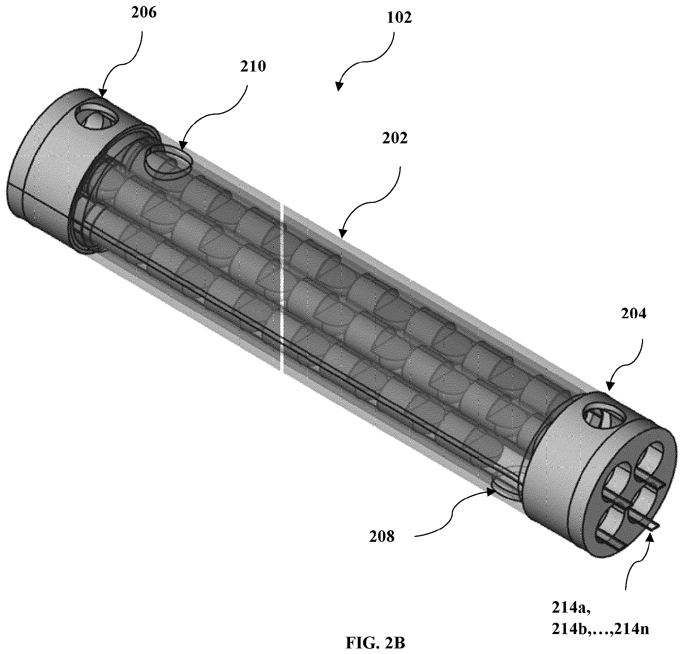

FIG.2B illustrates a transparent view of adsorption zone in the heat exchange arrangement using the system of FIG.1, in accordance with some embodiments of the present disclosure.

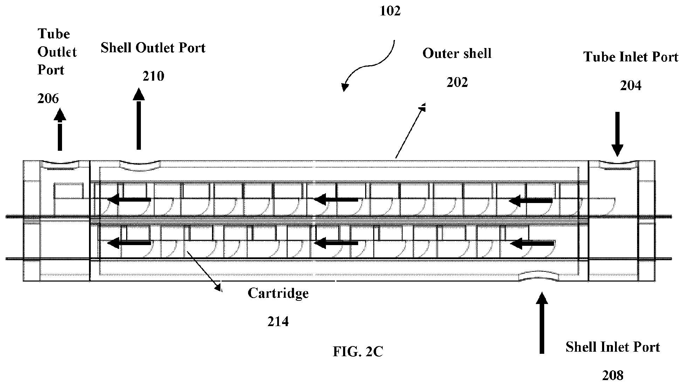

The tube inlet port 204 of the adsorption zone 102 allows the gaseous mixture to flow through each tube containing the plurality of cartridges (214a, 214b,...,214n) carrying sorbent material which are in motion. The sorbent material present inside each cartridge (referring to FIG.2C) adsorbs the target gas from the gaseous mixture and excess gaseous mixture exits via the tube outlet port 206. The plurality of cartridges (214a, 214b,...,214n) further move into the desorption zone 104.

The plurality of cartridges (214a,214b,..,214n) move in straight line direction within each tube on the locomotion track to reach at least one of the adsorption zone 102, the desorption zone 104, and the cooling zone 106. Each cartridge has a one way valve on front and rear ends through which the gaseous mixture flows through the plurality of cartridges (214a,214b,..,214n) carrying sorbent material within each tube.

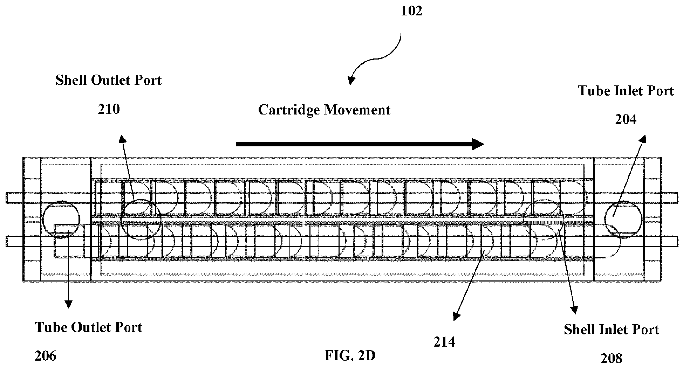

FIG.2D illustrates a cross-sectional top view of various components in the adsorption zone using the system of FIG.1, in accordance with some embodiments of the present disclosure. In view of various components in heat exchange arrangement, in the adsorption zone 102, the gaseous mixture enters through the tube inlet port 204 and is directed through each tube towards each cartridge that moves in the direction opposite to the gaseous mixture movement. The sorbent material carried inside each cartridge of each tube adsorbs the target gas from the gaseous mixture. The outer shell 202 of the adsorption zone 102 may be used to remove heat of adsorption via heat integration among various zones increasing the target gas adsorption potential of the adsorbent.

In the adsorption zone 102 the gaseous mixture enters through the tube inlet port 204 where counter-current movement occurs between the gaseous mixture and the plurality of cartridges (214a, 214b,...,214n) within each tube.

In the adsorption zone 102 the plurality of cartridges (214a, 214b,...,214n) adsorbs the target gas from the gaseous mixture passed through the tube inlet port 204, and the gaseous mixture exits from each tube through the tube outlet port 206 to reach the desorption zone 104.

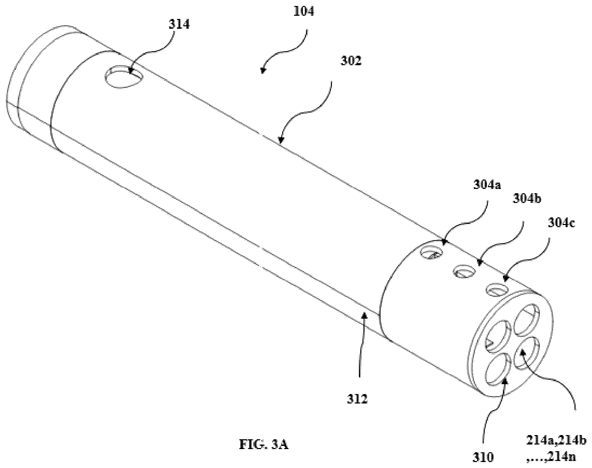

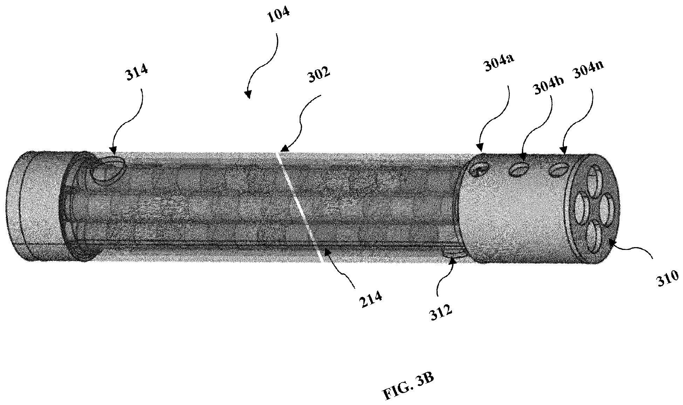

FIG.3A illustrates an isometric view and FIG.3B illustrates a transparent view of desorption zone in the heat exchange arrangement using the system of FIG.1, in accordance with some embodiments of the present disclosure.

Desorption zone 104 is covered with the outer shell 302 and the plurality of tubes (310a, 310b,...,310n) arranged horizontally inside the desorption zone 104.

The outer shell 302 comprises a plurality of evacuation ports (304a, 304b,..304n), a desorption shell inlet port 312 and a desorption shell outlet port 314.

The plurality of cartridges (214a, 214b,..,214n) are in motion inside the plurality of tubes (310a, 310b,...,310n) and each cartridge carries the sorbent material.

The outer shell 302 is filled with hot fluid passed through the desorption shell inlet port 312 and the desorption shell outlet port 314 allows the cold fluid to exit. This increases the temperature of each cartridge inside each tube to facilitate the desorption of the target gas.

The target gas adsorbed by the plurality of cartridges (214a, 214b,..214n) in the adsorption zone 102, is evacuated via plurality of evacuation ports (304a, 304b,..304n) through the outer shell 302 in the desorption zone 104.

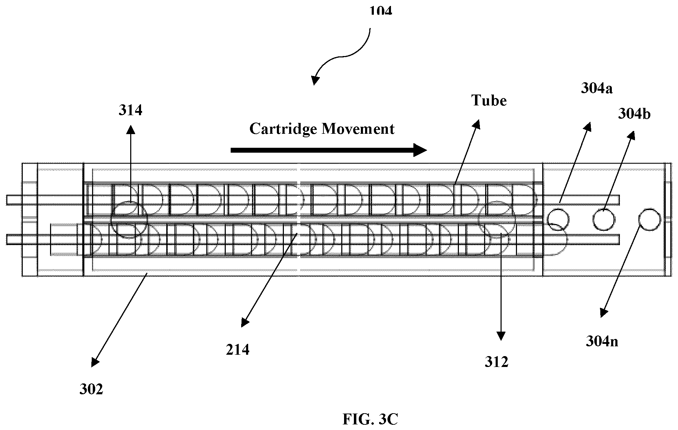

FIG.3C illustrates a cross-sectional top view of various components in the desorption zone having a plurality of evacuation ports using the system of FIG.1, in accordance with some embodiments of the present disclosure.

In the desorption zone 104, the shell and tube configuration facilitates the desorption of the target gas by indirect heating of the plurality of cartridges (214a, 214b,..,214n). Here, the hot fluid enters the desorption shell inlet port 312 where the plurality of cartridges (214a, 214b,...214n) are in motion inside tube in the counter-current movement to fluid flow to increase the temperature of the sorbent material to facilitate desorption and each cartridge moving inside each tube is heating up with suitable temperature. Further, a vacuum is simultaneously applied through the plurality of evacuation ports (304a, 304b,..304n) allowing exit of the desorbed gaseous mixture from the plurality of cartridges (214a, 214b,...214n).

The outer shell 202, 302, and 402 may have baffles to navigate the flow of fluid within the shell. These baffles help to increase the contact area and time between the plurality of tubes (310a, 310b,...,310n) and the fluid inside the shell, increasing the efficiency of the heat exchange process. Fins on the outside of the heat-exchange tubes can also be employed to increase heat transfer efficiency of the process.

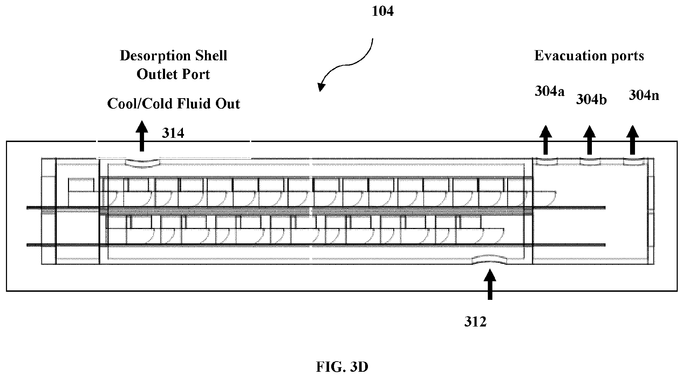

FIG.3D illustrates a cross-sectional side view of hot fluid flow over the plurality of cartridges carrying tubes in the desorption zone using the system of FIG.1, in accordance with some embodiments of the present disclosure.

The outer shell of the desorption zone 104 may be divided into multiple sections to facilitate evacuation of the desorbed gas at certain point. The desorption zone 104 may include one or more small heating zones and the plurality of evacuation ports(304a, 304b,..304n) in series such that the pressure drop across the bed is reduced and less power is required to withdraw the target gas of the desorption zone 104. This arrangement allows for better control of heat integration within the process. For example, the shell side fluid used to cool the sorbent bed in the cooling zone can be used for heating the bed for desorption, integrating the heat exchange operation of the process. The moving cartridges then move to the cooling zone 106.

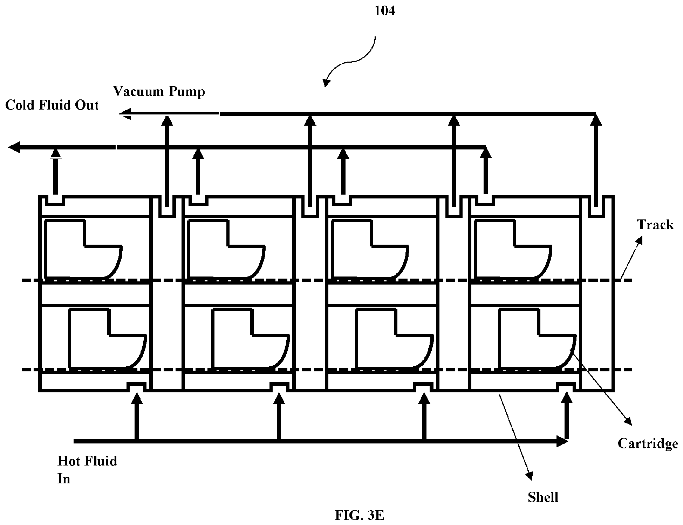

FIG.3E illustrates the plurality of heating zones and evacuation ports at different locations along the shell length in the desorption zone using the system of FIG.1, in accordance with some embodiments of the present disclosure. **In** one embodiment, where gas separation is performed by pressure swing adsorption (PSA) or vacuum swing adsorption (VSA), the outer shell of the heat exchanger may be removed, and each tube may consist of plurality of evacuation ports (304a, 304b,..304n) to reduce the pressure drop. This reduces the energy consumption in the desorption zone 104 employing PSA or VSA.

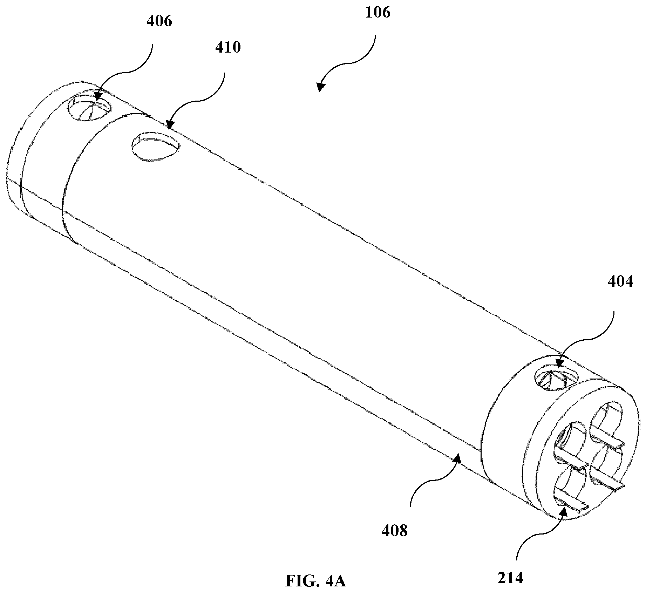

FIG.4A illustrates an isometric view of a cooling zone in the heat exchange arrangement using the system of FIG.1, in accordance with some embodiments of the present disclosure.

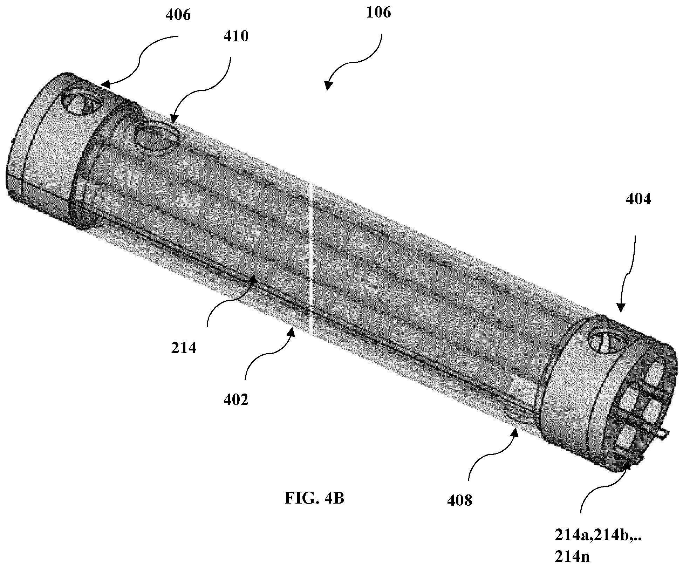

FIG.4B illustrates a transparent view of a cooling zone in the heat exchange arrangement using the system of FIG.1, in accordance with some embodiments of the present disclosure.

Cooling zone 106 consists of an outer shell 402 and the plurality of tubes arranged horizontally inside the cooling zone.

The outer shell 402 has a cooling tube inlet port 404, a cooling tube outlet port 406, a cooling shell inlet port 408 and a cooling shell outlet port 410.

The outer shell 402 is filled with cold fluid passed via the cooling shell inlet port 408 and hot fluid exits through the cooling shell outlet port 410.

The plurality of cartridges (214a, 214b,...214n) are in motion inside each tube and each cartridge carries the sorbent material. Cold fluid is passed in the outer shell 402 via the cooling shell inlet port 408 for indirect cooling of the sorbent carrying cartridges.

The cold fluid is passed through the cooling shell inlet port 408 of the cooling zone 106 where the plurality of cartridges (214a, 214b,...,214n) are in motion inside each tube and the hot fluid exits through the cooling shell outlet port 410. The cold fluid exchanges heat with the hot sorbent bed and cools the sorbent material inside each cartridge. Hot fluid exits through the cooling shell outlet port 410.

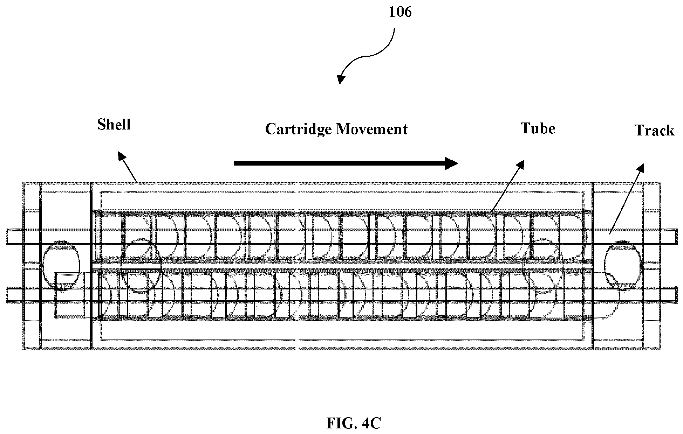

FIG.4C illustrates a cross-sectional top view of various components of a cooling zone in the heat exchange arrangement using the system of FIG.1, in accordance with some embodiments of the present disclosure.

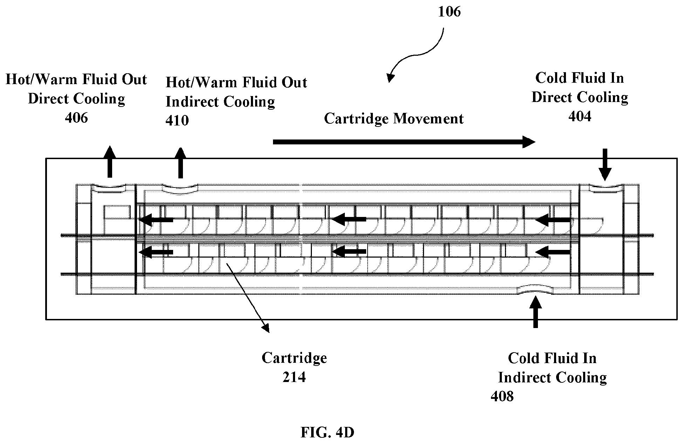

Cooling zone 106 prepares the moving sorbent bed for the next cycle of the gas separation process. The sorbent material can be directly cooled by sending the cooling fluid through the plurality of tubes, just like gaseous mixture in the adsorption zone 102 if it is preferred when it is not detrimental to the sorbent material. Finally, each regenerated cartridge is sent to the adsorption zone 102 for the next cycle of adsorption completing one cycle of the three-step process (the adsorption zone 102, the desorption zone 104 and the cooling zone 106). Additionally, before entering the adsorption zone 102 (referring now FIG.4D) each cartridge with degraded packing can be replaced within each tube with cartridge with fresh packing without disrupting the continuity of the gas separation process. This operation may be performed by replacing the depleted bed cartridges with fresh bed cartridge by opening the encasing at inert location in the process on the track between the cooling zone 106 and the adsorption zone 102.

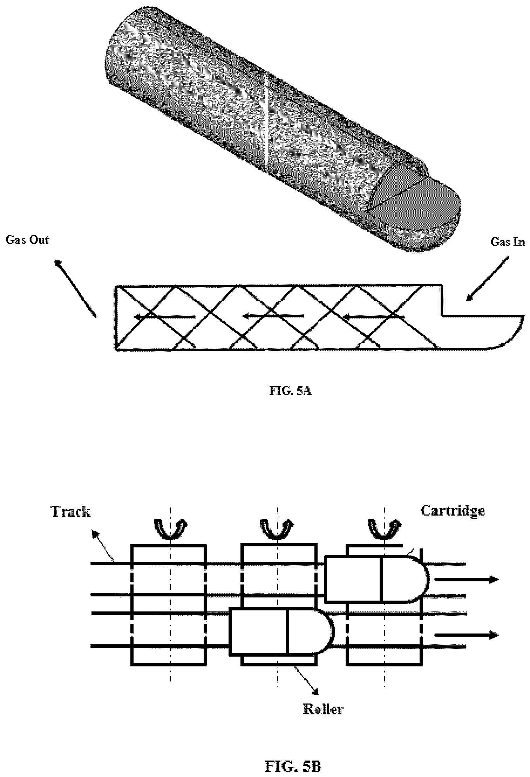

FIG.5A illustrates an isometric view of the sorbent carrying cartridge that moves inside the tubes of the heat exchange arrangement using the system of FIG.1, in accordance with some embodiments of the present disclosure. It is noted that the cross-section of each cartridge is not limited to the circular design. These moving cartridges have two sections, one with packing and the other that is empty. The length of filled and unfilled section is an important design variable. Longer empty spans reduce the fraction of loop length available for solids but may be better for well-developed gas flows.

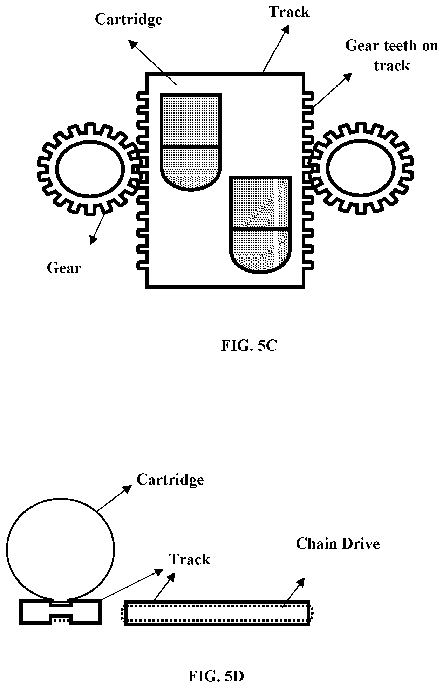

FIG.5B, FIG.5C and FIG.5D illustrate locomotion track of cartridges moving inside the tubes of the heat exchange arrangement using the system of FIG. 1, in accordance with some embodiments of the present disclosure. The plurality of cartridges as depicted straight in FIG.5B move through different zones in the process on a track via a suitable locomotion mechanism. There are many ways to enable the movement of the cartridges along the track. The complete track shall comprise, for example a roller drive, ball bearings in tubes, belt, or chain for mounting the cartridges and gears and the like. Each sorbent carrying cartridge travels on the track by various means such as gear drive (rack and pinion arrangement) or roller drive and need not be linearly aligned to facilitate the movement. When moving through the closed loop, each cartridge is given some degree of freedom in the plane and travels along a curved path connecting the straight segments. However, these turning areas may be used for automated monitoring and maintenance, such as replacing the depleted beds, rather than gas separation processes. However, these turning areas may also be used to place rollers that facilitate the motion of each cartridge.

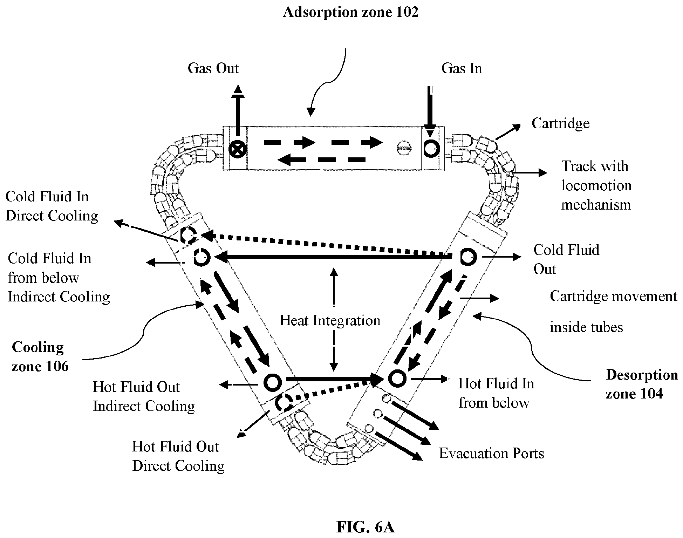

FIG.6A illustrates a cross-sectional top view of modular true moving bed apparatus in the heat exchange arrangement employing temperature swing adsorption (TSA) with heat integration between desorption zone and cooling zone using the system of FIG.1, in accordance with some embodiments of the present disclosure.

The track geometry as depicted in FIG.6A is triangular, but the track may have any desired geometry for example circular, elliptical, or two long linear segments connected by arcs as per the process requirements. From manufacturing and operational perspectives, loops with more linear segments may be preferred.

In one embodiment, the modular true moving bed process for gas separation using heat exchange reactor directs gaseous mixture via a tube inlet port 204 of the adsorption zone 102 containing sorbent material. The sorbent material is carried within each cartridge moving inside each tube of the adsorption zone 102. The modular true moving bed for gas separation using heat exchange reactor comprises the adsorption zone 102, the desorption zone 104, and the cooling zone 106.

Further, the gaseous mixture is passed through the tube inlet port 204 from which a target gas is adsorbed by the sorbent material present inside each cartridge among the plurality of cartridges (214a, 214b,...,214n) moving, in a counter-current direction to the gaseous mixture flow, inside each tube while passing through the adsorption zone 102.

The target gas adsorbed by the plurality of sorbent carrying cartridges moving within each tube in adsorption zone 102 is evacuated in the desorption zone 104 using hot fluid to indirectly heat up the sorbent bed and using the plurality of evacuation ports (304a, 304b,..304n).

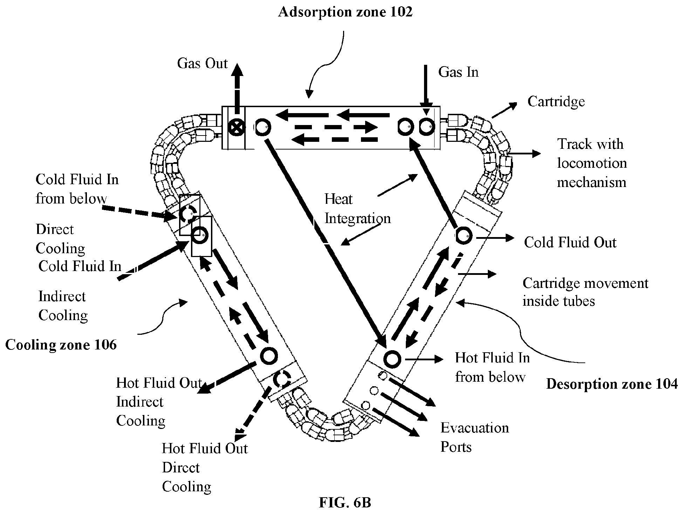

FIG.6B illustrates a cross-sectional top view of modular true moving bed apparatus in the heat exchange employing temperature swing adsorption (TSA) with heat integration between adsorption zone and desorption zone using the system of FIG.1, in accordance with some embodiments of the present disclosure.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein addresses unresolved problem of true moving bed. The embodiment, thus provides apparatus and process of modular true moving bed for gas separation using heat exchange reactor. Moreover, the embodiments herein further provides gas separation process for separating a target gas from the gaseous mixture. The method of the present disclosure provides counterflow between the target gas and the sorbent material containing carriages results in a shorter reaction front enhancing the heat and mass transfer characteristics of the process. This results higher adsorption rate and lower pressure drop as well as smaller length of the bed compared to fixed bed configuration. Since the sorbent particle are not moving and relative to each other, and are stationary with respect to the carriage, there is no particle attrition.

The gas separation process supports a structured, high performance adsorbent and packing that can be used in the proposed moving bed configuration, resulting in a reduced pressure drop compared to conventional adsorbents. The tubes and the sealing mechanism used in the adsorption zone minimizes gas leakage during the process and allows for continuous instead of batch process since the tubes with degraded packing can be replaced. This process is efficient for temperature swing adsorption processes due to the absence of contamination of the adsorbent bed due to steam condensation (or any heating/cooling medium). Provides an efficient heat exchange mechanisms to achieve thermal swing adsorption with excellent heat integration (when desired) with minimal additional heat requirement. The proposed efficient gas evacuation by opening the bed, allowing for multiple points gas withdrawal along the length of the desorption zone reducing pressure drop (or better vacuum utilization). Additionally, it eliminates the need for a dehydrator typically used in TSA, thus reducing the cost of the process.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

## Claims

1. A modular true moving bed apparatus for gas separation, comprising:
a heat exchange reactor arrangement (100) having at least one of an adsorption zone (102), a desorption zone (104) and a cooling zone (106) for indirect heat exchange,
wherein the adsorption zone (102) is covered with an outer shell (202), and a plurality of tubes (212) arranged horizontally inside the adsorption zone (102),
wherein the outer shell (202) comprises a tube inlet port (204), a tube outlet port (206), a shell inlet port (208), and a shell outlet port (210), wherein the tube inlet port (204) allows a gaseous mixture to flow over a plurality of cartridges (214a, 214b,...,214n) carrying sorbent material are in motion inside each tube,
wherein the desorption zone (104) is covered with the outer shell 302 and the plurality of tubes (310) arranged horizontally inside the desorption zone (104),
wherein the outer shell (302) comprises a plurality of evacuation ports (304a, 304b,..304n), a desorption shell inlet port (312) and a desorption shell outlet port (314),
wherein the outer shell (302) is filled with hot fluid passed via the desorption shell inlet port (312) and the cold fluid exits via the desorption shell outlet port (314) exhibits heat exchange, wherein the plurality of cartridges (214a, 214b,...214n) carrying sorbent material are in motion inside each tube (310), wherein the adsorption zone (102), the desorption zone (104), and the cooling zone (106) are connected sequentially by a locomotion track and the plurality of cartridges move through each zone on the track using a locomotion mechanism,
wherein the cooling zone (106) is covered with the outer shell (402) and the plurality of tubes arranged horizontally inside the cooling zone,
wherein the outer shell (402) have a cooling tube inlet port (404), a cooling tube outlet port (406), a cooling shell inlet port (408) and a cooling shell outlet port (410),
wherein the outer shell (402) is filled with a cold fluid passed via the cooling shell inlet port (408) and a hot fluid exits through the cooling shell outlet port (410);
allowing the gaseous mixture to flow through the tube inlet port of the adsorption zone (102), the sorbent material present inside each cartridge adsorbs a target gas to reach the desorption zone (104);
evacuating the target gas from the gaseous mixture adsorbed by the plurality of cartridges through the plurality of evacuation ports inside each tube; and
passing the cooling fluid through the cooling shell inlet port of the cooling zone (106) to flow over the tubes where the plurality of cartridges are in motion to perform heat exchange to cool the sorbent material.

2. The modular true moving bed apparatus of claim 1, wherein in the adsorption zone the gaseous mixture enters through the tube inlet port where counter-current movement occurs between the gaseous mixture and the plurality of cartridges within each tube.

3. The modular true moving bed apparatus of claim 1, wherein in the adsorption zone the plurality of cartridges adsorbs the target gas from the gaseous mixture passed through the tube inlet port, and the gaseous mixture exits from each tube through the tube outlet port.

4. The modular true moving bed apparatus of claim 1, wherein a cold fluid is passed through the shell inlet port of the adsorption zone (102) where the plurality of cartridges are in motion inside each tube and hot fluid exits through the shell outlet port (210).

5. The modular true moving bed apparatus of claim 1, wherein in the desorption zone the target gas adsorbed by the plurality of cartridges in the adsorption zone evacuates from the plurality of cartridges through the plurality of evacuation ports, wherein in the desorption zone the hot fluid enters the desorption shell inlet port where the plurality of cartridges are in motion inside tube in the counter-current movement to increase the temperature of the sorbent material to facilitate desorption.

6. The modular true moving bed apparatus of claim 1, wherein a vacuum is applied in the desorption zone through the plurality of evacuation ports allowing exit of the desorbed gaseous mixture from the plurality of cartridges.

7. The modular true moving bed apparatus for heat exchange reactor of claim 1, wherein the plurality of cartridges move in a straight line direction within each tube in at least one of the adsorption zone, the desorption zone, and the cooling zone.

8. The modular true moving bed apparatus of claim 1, wherein the plurality of cartridges traverse on a track within each tube reaching at least one of the adsorption zone, the desorption zone, and the cooling zone, wherein each cartridge have a one-way valve on two ends through which the gaseous mixture flows on the sorbent material within each tube.

9. A process of modular true moving bed process for gas separation conducted in a modular true moving bed apparatus as claimed in Claim 1, the process comprising:
directing gaseous mixture via a tube inlet port (204) of an adsorption zone (102) containing sorbent material, wherein the sorbent material is carried within each cartridge among a plurality of cartridges moving inside each tube of the adsorption zone (102), wherein a modular true moving bed for gas separation using heat exchange reactor comprises an adsorption zone (102), a desorption zone (104), and a cooling zone (106);
adsorbing a target gas from the gaseous mixture passed through the tube inlet port by the sorbent material present inside each cartridge among the plurality of cartridges moving inside each tube while passing through the adsorption zone (102);
evacuating the target gas from the plurality of cartridges (214a, 214b,...,214n) carrying the sorbent material moving within each tube passing through the desorption zone (104); and
cooling using a cooling fluid, the sorbent material present inside the plurality of cartridges (214a, 214b,...,214n) while passing through the cooling zone (106).

10. The process of claim 9, wherein in the adsorption zone (102) the gaseous mixture enters through the tube inlet port (204) where counter-current movement occurs between the gaseous mixture and the plurality of cartridges (214a, 214b,...,214n) within each tube,
wherein in the adsorption zone (102) the plurality of cartridges adsorbs the target gas from the gaseous mixture passed through the tube inlet port, and the gaseous mixture exits from each tube through the tube outlet port.

11. The process of claim 9, wherein a cold fluid is passed through the shell inlet port of the adsorption zone (102) where the plurality of cartridges (214a, 214b,...,214n) are in motion inside each tube and hot fluid exits through the shell outlet port (210).

12. The process of claim 9, wherein in the desorption zone (104) the target gas adsorbed by the plurality of cartridges in the adsorption zone evacuates from the plurality of cartridges (214a, 214b,...,214n) through the plurality of evacuation ports.

13. The process of claim 9, wherein in the desorption zone (104) the hot fluid enters the desorption shell inlet port (208) where the plurality of cartridges (214a, 214b,...,214n) are in motion inside tube in the counter-current movement to increase the temperature of the sorbent material to facilitate desorption, wherein a vacuum is applied in the desorption zone through the plurality of evacuation ports allowing exit of the desorbed gaseous mixture from the plurality of cartridges (214a, 214b,...,214n).

14. The process of claim 9, wherein the plurality of cartridges (214a, 214b,...,214n) move in a straight line direction within each tube in at least one of the adsorption zone (102), the desorption zone (104), and the cooling zone (106), wherein the plurality of cartridges (214a, 214b,...,214n) traverse on a track within each tube reaching at least one of the adsorption zone (102), the desorption zone (104), and the cooling zone (106).

15. The process of claim 9, wherein each cartridge have a one-way valve on the two ends through which the gaseous mixture flows to the moving sorbent material within each tube.

## Patentansprüche

1. Modulare True-Moving-Bed-Vorrichtung zur Gastrennung, umfassend:
eine Wärmeaustauschreaktoranordnung (100) mit mindestens einer von einer Adsorptionszone (102), einer Desorptionszone (104) und einer Kühlzone (106) für indirekten Wärmeaustausch,
wobei die Adsorptionszone (102) mit einer äußeren Hülle (202) und einer Mehrzahl von Rohren (212) bedeckt ist, die horizontal innerhalb der Adsorptionszone (102) angeordnet sind,
wobei die äußere Hülle (202) eine Rohreinlassöffnung (204), eine Rohrauslassöffnung (206), eine Hülleneinlassöffnung (208) und eine Hüllenauslassöffnung (210) umfasst,
wobei die Rohreinlassöffnung (204) einem gasförmigen Gemisch ermöglicht, über eine Mehrzahl von Kartuschen (214a, 214b, ..., 214n) zu strömen, die Sorptionsmaterial tragen, das innerhalb jedes Rohrs in Bewegung ist,
wobei die Desorptionszone (104) mit der äußeren Hülle 302 und der Mehrzahl von Rohren (310) bedeckt ist, die horizontal innerhalb der Desorptionszone (104) angeordnet sind,
wobei die äußere Hülle (302) eine Mehrzahl von Evakuierungsöffnungen (304a, 304b, ..., 304n), eine Desorptionshülleneinlassöffnung (312) und eine Desorptionshüllenauslassöffnung (314) umfasst,
wobei die äußere Hülle (302) mit heißem Fluid gefüllt ist, das über die Desorptionshülleneinlassöffnung (312) geleitet wird, und das kalte Fluid, das über die Desorptionshüllenauslassöffnung (314) austritt, einen Wärmeaustausch zeigt,
wobei die Mehrzahl von Kartuschen (214a, 214b, ..., 214n), die Sorptionsmaterial tragen, innerhalb jedes Rohrs (310) in Bewegung ist, wobei die Adsorptionszone (102), die Desorptionszone (104) und die Kühlzone (106) nacheinander durch eine Fortbewegungsbahn verbunden sind und sich die Mehrzahl von Kartuschen unter Verwendung eines Fortbewegungsmechanismus durch jede Zone auf der Bahn bewegt,
wobei die Kühlzone (106) mit der äußeren Hülle (402) und der Mehrzahl von Rohren bedeckt ist, die horizontal innerhalb der Kühlzone angeordnet sind,
wobei die äußere Hülle (402) eine Kühlrohreinlassöffnung (404), eine Kühlrohrauslassöffnung (406), eine Kühlhülleneinlassöffnung (408) und eine Kühlhüllenauslassöffnung (410) aufweist,
wobei die äußere Hülle (402) mit einem kalten Fluid gefüllt ist, das über die Kühlhülleneinlassöffnung (408) geleitet wird, und ein heißes Fluid durch die Kühlhüllenauslassöffnung (410) austritt;
Ermöglichen, dass das gasförmige Gemisch durch die Rohreinlassöffnung der Adsorptionszone (102) strömt, wobei das Sorptionsmaterial, das innerhalb jeder Kartusche vorhanden ist, ein Zielgas adsorbiert, um die Desorptionszone (104) zu erreichen;
Evakuieren des Zielgases aus dem gasförmigen Gemisch, das durch die Mehrzahl von Kartuschen adsorbiert wird, durch die Mehrzahl von Evakuierungsöffnungen innerhalb jedes Rohrs; und
Leiten des Kühlfluids durch die Kühlhülleneinlassöffnung der Kühlzone (106), um über die Rohre zu strömen, wo die Mehrzahl von Kartuschen in Bewegung ist, um einen Wärmeaustausch durchzuführen, um das Sorptionsmaterial zu kühlen.

2. Modulare echte Bewegtbettvorrichtung nach Anspruch 1, wobei in der Adsorptionszone das gasförmige Gemisch durch die Rohreinlassöffnung eintritt, wo eine Gegenstrombewegung zwischen dem gasförmigen Gemisch und der Mehrzahl von Kartuschen innerhalb jedes Rohrs auftritt.

3. Modulare echte Bewegtbettvorrichtung nach Anspruch 1, wobei in der Adsorptionszone die Mehrzahl von Kartuschen das Zielgas aus dem gasförmigen Gemisch adsorbiert, das durch die Rohreinlassöffnung geleitet wird, und das gasförmige Gemisch aus jedem Rohr durch die Rohrauslassöffnung austritt.

4. Modulare echte Bewegtbettvorrichtung nach Anspruch 1, wobei ein kaltes Fluid durch die Hülleneinlassöffnung der Adsorptionszone (102) geleitet wird, wo die Mehrzahl von Kartuschen innerhalb jedes Rohrs in Bewegung ist, und heißes Fluid durch die Hüllenauslassöffnung (210) austritt.

5. Modulare echte Bewegtbettvorrichtung nach Anspruch 1, wobei in der Desorptionszone das Zielgas, das durch die Mehrzahl von Kartuschen in der Adsorptionszone adsorbiert wird, aus der Mehrzahl von Kartuschen durch die Mehrzahl von Evakuierungsöffnungen evakuiert wird, wobei in der Desorptionszone das heiße Fluid in die Desorptionshülleneinlassöffnung eintritt, wo die Mehrzahl von Kartuschen innerhalb des Rohrs in der Gegenstrombewegung in Bewegung ist, um die Temperatur des Sorptionsmaterials zu erhöhen, um die Desorption zu erleichtern.

6. Modulare echte Bewegtbettvorrichtung nach Anspruch 1, wobei in der Desorptionszone durch die Mehrzahl von Evakuierungsöffnungen ein Vakuum angelegt wird, das den Austritt des desorbierten gasförmigen Gemisches aus der Mehrzahl von Kartuschen ermöglicht.

7. Modulare echte Bewegtbettvorrichtung für einen Wärmeaustauschreaktor nach Anspruch 1, wobei sich die Mehrzahl von Kartuschen in einer geradlinigen Richtung innerhalb jedes Rohrs in mindestens einer der Adsorptionszone, der Desorptionszone und der Kühlzone bewegt.

8. Modulare echte Bewegtbettvorrichtung nach Anspruch 1, wobei sich die Mehrzahl von Kartuschen auf einer Bahn innerhalb jedes Rohrs bewegt, die mindestens eine der Adsorptionszone, der Desorptionszone und der Kühlzone erreicht, wobei jede Kartusche ein Einwegventil an zwei Enden aufweist, durch das das gasförmige Gemisch auf dem Sorptionsmaterial innerhalb jedes Rohrs strömt.

9. Verfahren eines modularen True-Moving-Bed-Verfahrens zur Gastrennung, das in einer modularen echten Bewegtbettvorrichtung nach Anspruch 1 durchgeführt wird, wobei das Verfahren umfasst:
Leiten eines gasförmigen Gemisches über eine Rohreinlassöffnung (204) einer Adsorptionszone (102), die Sorptionsmaterial enthält, wobei das Sorptionsmaterial innerhalb jeder Kartusche unter einer Mehrzahl von Kartuschen getragen wird, die sich innerhalb jedes Rohrs der Adsorptionszone (102) bewegen, wobei ein modulares True-Moving-Bed zur Gastrennung unter Verwendung eines Wärmeaustauschreaktors eine Adsorptionszone (102), eine Desorptionszone (104) und eine Kühlzone (106) umfasst;
Adsorbieren eines Zielgases aus dem gasförmigen Gemisch, das durch die Rohreinlassöffnung geleitet wird, durch das Sorptionsmaterial, das innerhalb jeder Kartusche unter der Mehrzahl von Kartuschen vorhanden ist, die sich innerhalb jedes Rohrs bewegen, während sie durch die Adsorptionszone (102) geleitet werden;
Evakuieren des Zielgases aus der Mehrzahl von Kartuschen (214a, 214b, ..., 214n), die das Sorptionsmaterial tragen, das sich innerhalb jedes Rohrs bewegt, das durch die Desorptionszone (104) geleitet wird; und
Kühlen des Sorptionsmaterials, das innerhalb der Mehrzahl von Kartuschen (214a, 214b, ..., 214n) vorhanden ist, während es durch die Kühlzone (106) geleitet wird, unter Verwendung eines Kühlfluids.

10. Verfahren nach Anspruch 9, wobei in der Adsorptionszone (102) das gasförmige Gemisch durch die Rohreinlassöffnung (204) eintritt, wo eine Gegenstrombewegung zwischen dem gasförmigen Gemisch und der Mehrzahl von Kartuschen (214a, 214b, ..., 214n) innerhalb jedes Rohrs auftritt,
wobei in der Adsorptionszone (102) die Mehrzahl von Kartuschen das Zielgas aus dem gasförmigen Gemisch adsorbiert, das durch die Rohreinlassöffnung geleitet wird, und das gasförmige Gemisch aus jedem Rohr durch die Rohrauslassöffnung austritt.

11. Verfahren nach Anspruch 9, wobei ein kaltes Fluid durch die Hülleneinlassöffnung der Adsorptionszone (102) geleitet wird, wo die Mehrzahl von Kartuschen (214a, 214b, ..., 214n) innerhalb jedes Rohrs in Bewegung ist, und heißes Fluid durch die Hüllenauslassöffnung (210) austritt.

12. Verfahren nach Anspruch 9, wobei in der Desorptionszone (104) das Zielgas, das durch die Mehrzahl von Kartuschen in der Adsorptionszone adsorbiert wird, aus der Mehrzahl von Kartuschen (214a, 214b, ..., 214n) durch die Mehrzahl von Evakuierungsöffnungen evakuiert wird.

13. Verfahren nach Anspruch 9, wobei in der Desorptionszone (104) das heiße Fluid in die Desorptionshülleneinlassöffnung (208) eintritt, wo die Mehrzahl von Kartuschen (214a, 214b, ..., 214n) innerhalb des Rohrs in der Gegenstrombewegung in Bewegung ist, um die Temperatur des Sorptionsmaterials zu erhöhen, um die Desorption zu erleichtern, in der Desorptionszone durch die Mehrzahl von Evakuierungsöffnungen ein Vakuum angelegt wird, das den Austritt des desorbierten gasförmigen Gemisches aus der Mehrzahl von Kartuschen (214a, 214b, ..., 214n) ermöglicht.

14. Verfahren nach Anspruch 9, wobei sich die Mehrzahl von Kartuschen (214a, 214b, ..., 214n) in einer geradlinigen Richtung innerhalb jedes Rohrs in mindestens einer der Adsorptionszone (102), der Desorptionszone (104) und der Kühlzone (106) bewegt, wobei sich die Mehrzahl von Kartuschen (214a, 214b, ..., 214n) auf einer Bahn innerhalb jedes Rohrs bewegt, die mindestens eine der Adsorptionszone (102), der Desorptionszone (104) und der Kühlzone (106) erreicht.

15. Verfahren nach Anspruch 9, wobei jede Kartusche ein Einwegventil an den zwei Enden aufweist, durch das das gasförmige Gemisch zu dem sich bewegenden Sorptionsmaterial innerhalb jedes Rohrs strömt.

## Revendications

1. Appareil modulaire à lit mobile véritable pour la séparation de gaz, comprenant :
un agencement de réacteur d'échange de chaleur (100) ayant au moins l'une d'une zone d'adsorption (102), d'une zone de désorption (104) et d'une zone de refroidissement (106) pour un échange de chaleur indirect,
dans lequel la zone d'adsorption (102) est recouverte d'une coque externe (202), et d'une pluralité de tubes (212) agencés horizontalement à l'intérieur de la zone d'adsorption (102),
dans lequel la coque externe (202) comprend un orifice d'entrée de tube (204), un orifice de sortie de tube (206), un orifice d'entrée de coque (208), et un orifice de sortie de coque (210),
dans lequel l'orifice d'entrée de tube (204) permet à un mélange gazeux de s'écouler sur une pluralité de cartouches (214a, 214b, ..., 214n) portant un matériau sorbant en mouvement à l'intérieur de chaque tube,
dans lequel la zone de désorption (104) est recouverte de la coque externe (302) et de la pluralité de tubes (310) agencés horizontalement à l'intérieur de la zone de désorption (104),
dans lequel la coque externe (302) comprend une pluralité d'orifices d'évacuation (304a, 304b, ..., 304n), un orifice d'entrée de coque de désorption (312) et un orifice de sortie de coque de désorption (314),
dans lequel la coque externe (302) est remplie de fluide chaud passé via l'orifice d'entrée de coque de désorption (312) et le fluide froid sort via l'orifice de sortie de coque de désorption (314), présentant un échange de chaleur,
dans lequel la pluralité de cartouches (214a, 214b, ..., 214n) portant un matériau sorbant en mouvement à l'intérieur de chaque tube (310), dans lequel la zone d'adsorption (102), la zone de désorption (104), et la zone de refroidissement (106) sont reliées séquentiellement par une piste de locomotion et la pluralité de cartouches se déplacent à travers chaque zone sur la piste en utilisant un mécanisme de locomotion,
dans lequel la zone de refroidissement (106) est recouverte de la coque externe (402) et de la pluralité de tubes agencés horizontalement à l'intérieur de la zone de refroidissement,
dans lequel la coque externe (402) a un orifice d'entrée de tube de refroidissement (404), un orifice de sortie de tube de refroidissement (406), un orifice d'entrée de coque de refroidissement (408) et un orifice de sortie de coque de refroidissement (410),
dans lequel la coque externe (402) est remplie d'un fluide froid passé via l'orifice d'entrée de coque de refroidissement (408) et un fluide chaud sort à travers l'orifice de sortie de coque de refroidissement (410) ;
permettre au mélange gazeux de s'écouler à travers l'orifice d'entrée de tube de la zone d'adsorption (102), le matériau sorbant présent à l'intérieur de chaque cartouche adsorbant un gaz cible pour atteindre la zone de désorption (104) ;
évacuer le gaz cible du mélange gazeux adsorbé par la pluralité de cartouches à travers la pluralité d'orifices d'évacuation à l'intérieur de chaque tube ; et
faire passer le fluide de refroidissement à travers l'orifice d'entrée de coque de refroidissement de la zone de refroidissement (106) pour s'écouler sur les tubes où la pluralité de cartouches sont en mouvement pour effectuer un échange de chaleur pour refroidir le matériau sorbant.

2. Appareil modulaire à lit mobile véritable selon la revendication 1, dans lequel dans la zone d'adsorption, le mélange gazeux entre à travers l'orifice d'entrée de tube où un mouvement à contre-courant se produit entre le mélange gazeux et la pluralité de cartouches à l'intérieur de chaque tube.

3. Appareil modulaire à lit mobile véritable selon la revendication 1, dans lequel dans la zone d'adsorption, la pluralité de cartouches adsorbe le gaz cible du mélange gazeux passé à travers l'orifice d'entrée de tube, et le mélange gazeux sort de chaque tube à travers l'orifice de sortie de tube.

4. Appareil modulaire à lit mobile véritable selon la revendication 1, dans lequel un fluide froid passe à travers l'orifice d'entrée de coque de la zone d'adsorption (102) où la pluralité de cartouches sont en mouvement à l'intérieur de chaque tube et un fluide chaud sort à travers l'orifice de sortie de coque (210).

5. Appareil modulaire à lit mobile véritable selon la revendication 1, dans lequel dans la zone de désorption, le gaz cible adsorbé par la pluralité de cartouches dans la zone d'adsorption s'évacue de la pluralité de cartouches à travers la pluralité d'orifices d'évacuation, dans lequel dans la zone de désorption, le fluide chaud entre dans l'orifice d'entrée de coque de désorption où la pluralité de cartouches sont en mouvement à l'intérieur du tube dans le mouvement à contre-courant pour augmenter la température du matériau sorbant pour faciliter la désorption.

6. Appareil modulaire à lit mobile véritable selon la revendication 1, dans lequel un vide est appliqué dans la zone de désorption à travers la pluralité d'orifices d'évacuation permettant la sortie du mélange gazeux désorbé de la pluralité de cartouches.

7. Appareil modulaire à lit mobile véritable pour réacteur d'échange de chaleur selon la revendication 1, dans lequel la pluralité de cartouches se déplacent dans une direction de ligne droite à l'intérieur de chaque tube dans au moins l'une de la zone d'adsorption, de la zone de désorption et de la zone de refroidissement.

8. Appareil modulaire à lit mobile véritable selon la revendication 1, dans lequel la pluralité de cartouches se déplacent sur une piste à l'intérieur de chaque tube atteignant au moins l'une de la zone d'adsorption, de la zone de désorption et de la zone de refroidissement, dans lequel chaque cartouche a une soupape unidirectionnelle sur deux extrémités à travers laquelle le mélange gazeux s'écoule sur le matériau sorbant à l'intérieur de chaque tube.

9. Procédé de procédé modulaire à lit mobile véritable pour la séparation de gaz réalisé dans un appareil modulaire à lit mobile véritable selon la revendication 1, le procédé comprenant :
le passage d'un mélange gazeux via un orifice d'entrée de tube (204) d'une zone d'adsorption (102) contenant un matériau sorbant, dans lequel le matériau sorbant est transporté à l'intérieur de chaque cartouche parmi une pluralité de cartouches se déplaçant à l'intérieur de chaque tube de la zone d'adsorption (102), dans lequel un lit mobile véritable modulaire pour la séparation de gaz utilisant un réacteur d'échange de chaleur comprend une zone d'adsorption (102), une zone de désorption (104) et une zone de refroidissement (106) ;
l'adsorption d'un gaz cible du mélange gazeux passé à travers l'orifice d'entrée de tube par le matériau sorbant présent à l'intérieur de chaque cartouche parmi la pluralité de cartouches se déplaçant à l'intérieur de chaque tube tout en passant à travers la zone d'adsorption (102) ;
l'évacuation du gaz cible de la pluralité de cartouches (214a, 214b, ..., 214n) portant le matériau sorbant se déplaçant à l'intérieur de chaque tube passant à travers la zone de désorption (104) ; et
le refroidissement en utilisant un fluide de refroidissement, du matériau sorbant présent à l'intérieur de la pluralité de cartouches (214a, 214b, ..., 214n) tout en passant à travers la zone de refroidissement (106).

10. Procédé selon la revendication 9, dans lequel dans la zone d'adsorption (102), le mélange gazeux entre à travers l'orifice d'entrée de tube (204) où un mouvement à contre-courant se produit entre le mélange gazeux et la pluralité de cartouches (214a, 214b, ..., 214n) à l'intérieur de chaque tube,
dans lequel dans la zone d'adsorption (102), la pluralité de cartouches adsorbe le gaz cible du mélange gazeux passé à travers l'orifice d'entrée de tube, et le mélange gazeux sort de chaque tube à travers l'orifice de sortie de tube.

11. Procédé selon la revendication 9, dans lequel un fluide froid passe à travers l'orifice d'entrée de coque de la zone d'adsorption (102) où la pluralité de cartouches (214a, 214b, ..., 214n) sont en mouvement à l'intérieur de chaque tube et un fluide chaud sort à travers l'orifice de sortie de coque (210).

12. Procédé selon la revendication 9, dans lequel dans la zone de désorption (104), le gaz cible adsorbé par la pluralité de cartouches dans la zone d'adsorption s'évacue de la pluralité de cartouches (214a, 214b, ..., 214n) à travers la pluralité d'orifices d'évacuation.

13. Procédé selon la revendication 9, dans lequel dans la zone de désorption (104), le fluide chaud entre dans l'orifice d'entrée de coque de désorption (208) où la pluralité de cartouches (214a, 214b, ..., 214n) sont en mouvement à l'intérieur du tube dans le mouvement à contre-courant pour augmenter la température du matériau sorbant pour faciliter la désorption, dans lequel un vide est appliqué dans la zone de désorption à travers la pluralité d'orifices d'évacuation permettant la sortie du mélange gazeux désorbé de la pluralité de cartouches (214a, 214b, ..., 214n).

14. Procédé selon la revendication 9, dans lequel la pluralité de cartouches (214a, 214b, ..., 214n) se déplacent dans une direction de ligne droite à l'intérieur de chaque tube dans au moins l'une de la zone d'adsorption (102), de la zone de désorption (104) et de la zone de refroidissement (106), dans lequel la pluralité de cartouches (214a, 214b, ..., 214n) se déplacent sur une piste à l'intérieur de chaque tube atteignant au moins l'une de la zone d'adsorption (102), de la zone de désorption (104) et de la zone de refroidissement (106).

15. Procédé selon la revendication 9, dans lequel chaque cartouche a une soupape unidirectionnelle sur les deux extrémités à travers laquelle le mélange gazeux s'écoule vers le matériau sorbant en mouvement à l'intérieur de chaque tube.
